# EUROPEAN PATENT APPLICATION

(11) **EP 4 790 666 A1**
(43) Date of publication of application: **12.08.2026**
(21) Application number: 24876077.9
(22) Date of filing: 13.06.2024
(51) Int. Cl.: G06V 20/70, G06V 10/80, G06V 10/774, G06V 10/82, G06N 3/08, G06N 3/04

(54) **DATA LABELING METHOD, APPARATUS, AND DEVICE**

(30) Priority: 13.10.2023 CN 202311334022; 31.01.2024 CN 202410148715
(71) Applicant: Huawei Cloud Computing Technologies Co., Ltd., Gui'an New District, Guizhou 550025 (CN)
(72) Inventor: MAO, Sitong, Guiyang, Guizhou 550025 (CN); ZHOU, Shunbo, Guiyang, Guizhou 550025 (CN); WANG, Feng, Guiyang, Guizhou 550025 (CN); MA, Xuan, Guiyang, Guizhou 550025 (CN); YU, Xuan, Hangzhou, Zhejiang 310058 (CN); WANG, Yue, Hangzhou, Zhejiang 310058 (CN)
(74) Representative: Körber, Martin Hans
(86) International application number: PCT/CN2024/099007
(87) International publication number: WO 2025/077252

(57) **Abstract**

This application provides a data annotation method and apparatus, and a device, and relates to the field of cloud technologies. The method includes: receiving first to-be-annotated data sent by a user, where the first to-be-annotated data is at least one of an image, a point cloud, and a depth map; obtaining, from a multimodal foundation model library, a target vertical-domain multimodal foundation model corresponding to a service scenario to which the first to-be-annotated data belongs; receiving a first downstream task selection message sent by the user, where the first downstream task selection message indicates a first annotation type performed on the to-be-annotated data; obtaining, from a downstream task model library, a target downstream task model that corresponds to the service scenario to which the first to-be-annotated data belongs and that is used for performing the first annotation type; and annotating the first to-be-annotated data based on the target vertical-domain multimodal foundation model and the target downstream task model. According to this application, automatic data annotation can be implemented.

## Description

This application claims priorities to Chinese Patent Application No. 202311334022.7, filed on October 13, 2023 and entitled "DATA ANNOTATION METHOD AND APPARATUS, AND DEVICE", and to Chinese Patent Application No. 202410148715.5, filed on January 31, 2024 and entitled "DATA ANNOTATION METHOD AND APPARATUS, AND DEVICE", both of which are incorporated herein by reference in their entireties.

### TECHNICAL FIELD

This application relates to the field of cloud technologies, and in particular, to a data annotation method and apparatus, and a device.

### BACKGROUND

With development of artificial intelligence (Artificial Intelligence, AI) technologies, AI has been widely used in various industries such as automobiles, robotics, and healthcare. In the AI technology, various neural network models play a key role. The neural network model may implement functions such as object recognition, object segmentation, and scene understanding. To make the neural network model more accurate when implementing these functions, the neural network model needs to be trained in advance by using annotated data. The annotated data is usually obtained by manually annotating raw data. However, the manual annotation is inefficient.

### SUMMARY

This application provides a data annotation method and apparatus, and a device, to automatically annotate data. Corresponding technical solutions are as follows.

According to a first aspect, a data annotation method is provided, where the method is applied to a cloud platform, the cloud platform is deployed with a multimodal foundation model library and a downstream task model library, the multimodal foundation model library stores a plurality of vertical-domain multimodal foundation models, each vertical-domain multimodal foundation model corresponds to a service scenario, and the downstream task model library stores a plurality of downstream task models that correspond to each service scenario and that are used for respectively performing a plurality of annotation types. The method includes:
receiving first to-be-annotated data sent by a user, where the first to-be-annotated data is at least one of an image, a point cloud, and a depth map; obtaining, from the multimodal foundation model library, a target vertical-domain multimodal foundation model corresponding to a service scenario to which the first to-be-annotated data belongs; receiving a first downstream task selection message sent by the user, where the first downstream task selection message indicates a first annotation type performed on the to-be-annotated data; obtaining, from the downstream task model library, a target downstream task model that corresponds to the service scenario to which the first to-be-annotated data belongs and that is used for performing the first annotation type; and annotating the first to-be-annotated data based on the target vertical-domain multimodal foundation model and the target downstream task model, to obtain annotated data corresponding to the first to-be-annotated data, where the target vertical-domain multimodal foundation model is used for performing feature extraction on the first to-be-annotated data, and the target downstream task model is used for outputting, based on a feature extracted by the target vertical-domain multimodal foundation model, the annotated data corresponding to the first to-be-annotated data.

In the technical solution provided in this application, the cloud platform is deployed with the multimodal foundation model library and the downstream task model library, the multimodal foundation model library stores the plurality of vertical-domain multimodal foundation models, each vertical-domain multimodal foundation model corresponds to the service scenario, and the downstream task model library stores the plurality of downstream task models that correspond to each service scenario and that are used for respectively performing the plurality of annotation types. The user may upload at least one of an image and a point cloud to the cloud platform as to-be-annotated data. The to-be-annotated data may be collected by the user by using a real sensor or a virtual sensor. The user may further specify an annotation type. The annotation type may be two-dimensional (two-dimensional, 2D) object recognition, 2D object segmentation, 2D scene understanding, 3D object recognition, 3D object segmentation, 3D scene understanding, or the like. The cloud platform selects, from the multimodal foundation model library, a target vertical-domain multimodal foundation model corresponding to a service scenario to which the to-be-annotated data belongs, and selects, from the downstream task model library, a target downstream task model that corresponds to the service scenario to which the to-be-annotated data belongs and that is used for performing the annotation type specified by the user; and then annotates the to-be-annotated data by using the selected target multimodal foundation model and the selected target downstream task model. According to the method, the to-be-annotated data uploaded by the user can be automatically annotated based on an annotation requirement of the user, thereby improving annotation efficiency.

In a possible implementation, before annotating the first to-be-annotated data based on the target vertical-domain multimodal foundation model and the target downstream task model, the method further includes:
training the target vertical-domain multimodal foundation model based on the first to-be-annotated data.

In the technical solution provided in this application, before the target vertical-domain multimodal foundation model is used, unsupervised training may be performed on the target vertical-domain multimodal foundation model by using the first to-be-annotated data uploaded by the user for annotation. The training herein may also be referred to as fine tuning of the target vertical-domain multimodal foundation model.

In a possible implementation, the method further includes:
receiving an annotated data type selection message sent by the user; performing semantic reconstruction on first annotated data, to obtain first reconstructed annotated data of a data type indicated by the annotated data type selection message; and sending the first reconstructed annotated data to the user.

In the technical solution provided in this application, the user may specify an annotated data type, for example, an image, a point cloud, or a depth map. After the annotated data is obtained, reconstructed annotated data of the annotated data type specified by the user may be obtained through semantic reconstruction, and the reconstructed annotated data is returned to the user.

In a possible implementation, the method further includes:
performing semantic reconstruction on first annotated data, to obtain second reconstructed annotated data, where a data type of the second reconstructed annotated data is the same as a data type of the annotated data; training the target vertical-domain multimodal foundation model and the target downstream task model based on the second reconstructed annotated data, to obtain a trained vertical-domain multimodal foundation model and a trained downstream task model; and updating the target vertical-domain multimodal foundation model in the multimodal foundation model library to the trained vertical-domain multimodal foundation model; and updating the target downstream task model in the downstream task model library to the trained downstream task model.

In the technical solution provided in this application, for the annotated data, more annotated data may be generated through semantic reconstruction, and fine-tuning and updating are performed on the target vertical-domain multimodal foundation model and the target downstream task model by using the more generated annotated data, so that the target vertical-domain multimodal foundation model and the target downstream task model more accurately annotates the service scenario to which the to-be-annotated data belongs.

In a possible implementation, the user may specify a service scenario. Correspondingly, processing may be as follows:
receiving a service scenario selection message sent by the user; and determining a service scenario indicated by the service scenario selection message as the service scenario to which the first to-be-annotated data belongs.

In a possible implementation, the method further includes:
receiving second to-be-annotated data sent by the user, where the second to-be-annotated data is at least one of an image, a point cloud, and a depth map; receiving a second downstream task selection message sent by the user, where the second downstream task selection message indicates a second annotation type performed on the second to-be-annotated data; determining that the multimodal foundation model library does not store a vertical-domain multimodal foundation model corresponding to a service scenario to which the second to-be-annotated data belongs; obtaining manually annotated data corresponding to a part of data in the second to-be-annotated data, where the manually annotated data is annotated based on the second annotation type; performing semantic reconstruction on the manually annotated data, to obtain third reconstructed annotated data; and sending the third reconstructed annotated data to the user.

In the technical solution provided in this application, if the cloud platform does not store the target vertical-domain multimodal foundation model corresponding to the service scenario to which the to-be-annotated data belongs, the to-be-annotated data may be manually annotated, to obtain annotated data. The annotated data may be directly returned to the user. Alternatively, more annotated data may be obtained through semantic reconstruction, and the more annotated data is returned to the user.

In a possible implementation, the multimodal foundation model library further stores a general-domain multimodal foundation model, and the downstream task model library further stores a plurality of general-domain downstream task models used for respectively performing the plurality of annotation types. The method further includes:
obtaining a general-domain multimodal foundation model from the multimodal foundation model library, and obtaining, from the downstream task model library, a target general-domain downstream task model used for performing the second annotation type; training the general-domain multimodal foundation model and the target general-domain downstream task model based on the third reconstructed annotated data, to obtain a trained general-domain multimodal foundation model and a trained general-domain downstream task model; storing the trained general-domain multimodal foundation model into the multimodal foundation model library as the vertical-domain multimodal foundation model corresponding to the service scenario to which the second to-be-annotated data belongs; and using the trained general-domain downstream task model as a downstream task model that corresponds to the service scenario to which the second to-be-annotated data belongs and that is used for performing the second annotation type.

In the technical solution provided in this application, if the cloud platform does not store the target vertical-domain multimodal foundation model corresponding to the service scenario to which the to-be-annotated data belongs, after the annotated data is obtained and semantic reconstruction is performed to obtain the reconstructed annotated data, the general-domain multimodal foundation model and the target general-domain downstream task model may be trained by using the reconstructed annotated data, to obtain the vertical-domain multimodal foundation model corresponding to the service scenario to which the second to-be-annotated data belongs and the downstream task model that corresponds to the service scenario to which the second to-be-annotated data belongs and that is used for performing the second annotation type. In this way, if the user subsequently uploads to-be-annotated data of the service scenario to which the second to-be-annotated data belongs, automatic annotation may be performed by directly using the vertical-domain multimodal foundation model that is obtained through the training and that corresponds to the service scenario to which the second to-be-annotated data belongs and the downstream task model that corresponds to the service scenario to which the second to-be-annotated data belongs and that is used for performing the second annotation type.

According to a second aspect, a data annotation apparatus is provided, where the method is applied to a cloud platform, the cloud platform is deployed with a multimodal foundation model library and a downstream task model library, the multimodal foundation model library stores a plurality of vertical-domain multimodal foundation models, each vertical-domain multimodal foundation model corresponds to a service scenario, and the downstream task model library stores a plurality of downstream task models that correspond to each service scenario and that are used for respectively performing a plurality of annotation types. The method includes:
a receiving module, configured to: receive to-be-annotated data sent by a user, where the to-be-annotated data is at least one of an image, a point cloud, and a depth map; and receive a first downstream task selection message sent by the user, where the first downstream task selection message indicates a first annotation type performed on the to-be-annotated data; and
an annotation module, configured to: obtain, from the multimodal foundation model library, a target vertical-domain multimodal foundation model corresponding to a service scenario to which the first to-be-annotated data belongs; and obtain, from the downstream task model library, a target downstream task model that corresponds to the service scenario to which the first to-be-annotated data belongs and that is used for performing the first annotation type.

The annotation module is further configured to annotate the first to-be-annotated data based on the target vertical-domain multimodal foundation model and the target downstream task model, to obtain annotated data corresponding to the first to-be-annotated data, where the target vertical-domain multimodal foundation model is used for performing feature extraction on the first to-be-annotated data, and the target downstream task model is used for outputting, based on a feature extracted by the target vertical-domain multimodal foundation model, the annotated data corresponding to the first to-be-annotated data.

In a possible implementation, the apparatus further includes a training module, configured to:
train the target vertical-domain multimodal foundation model based on the first to-be-annotated data.

In a possible implementation, the receiving module is further configured to:
receive an annotated data type selection message sent by the user.

The apparatus further includes a reconstruction module, configured to:
perform semantic reconstruction on first annotated data, to obtain first reconstructed annotated data of a data type indicated by the annotated data type selection message; and
send the first reconstructed annotated data to the user.

In a possible implementation, the apparatus further includes a reconstruction module, configured to:
perform semantic reconstruction on first annotated data, to obtain second reconstructed annotated data, where a data type of the second reconstructed annotated data is the same as a data type of the annotated data.

The apparatus further includes a training module, configured to train the target vertical-domain multimodal foundation model and the target downstream task model based on the second reconstructed annotated data, to obtain a trained vertical-domain multimodal foundation model and a trained downstream task model.

The apparatus further includes an update module, configured to: update the target vertical-domain multimodal foundation model in the multimodal foundation model library to the trained vertical-domain multimodal foundation model; and update the target downstream task model in the downstream task model library to the trained downstream task model.

In a possible implementation, the receiving module is further configured to:
receive a service scenario selection message sent by the user; and
determine a service scenario indicated by the service scenario selection message as the service scenario to which the first to-be-annotated data belongs.

The annotation module is configured to:
determine that the multimodal foundation model library stores the target vertical-domain multimodal foundation model corresponding to the service scenario to which the first to-be-annotated data belongs.

In a possible implementation, the receiving module is further configured to:
receive second to-be-annotated data sent by the user, where the second to-be-annotated data is at least one of an image, a point cloud, and a depth map; and
receive a second downstream task selection message sent by the user, where the second downstream task selection message indicates a second annotation type performed on the second to-be-annotated data.

The annotation module is further configured to:
determine that the multimodal foundation model library does not store a vertical-domain multimodal foundation model corresponding to a service scenario to which the second to-be-annotated data belongs; and obtain manually annotated data corresponding to a part of data in the second to-be-annotated data, where the manually annotated data is annotated based on the second annotation type.

The apparatus further includes a reconstruction module, configured to: perform semantic reconstruction on the manually annotated data, to obtain third reconstructed annotated data; and send the third reconstructed annotated data to the user.

In a possible implementation, the multimodal foundation model library further stores a general-domain multimodal foundation model, and the downstream task model library further stores a plurality of general-domain downstream task models used for respectively performing the plurality of annotation types. The training module is further configured to:
obtain a general-domain multimodal foundation model from the multimodal foundation model library;
obtain, from the downstream task model library, a target general-domain downstream task model used for performing the second annotation type;
train the general-domain multimodal foundation model and the target general-domain downstream task model based on the third reconstructed annotated data, to obtain a trained general-domain multimodal foundation model and a trained general-domain downstream task model;
store the trained general-domain multimodal foundation model into the multimodal foundation model library as the vertical-domain multimodal foundation model corresponding to the service scenario to which the second to-be-annotated data belongs; and
store the trained general-domain downstream task model into the downstream task model library as a downstream task model that corresponds to the service scenario to which the second to-be-annotated data belongs and that is used for performing the second annotation type.

According to a third aspect, a computing device cluster is provided. The computing device cluster includes at least one computing device, and each computing device includes a processor and a memory.

The processor of the at least one computing device is configured to execute instructions stored in the memory of the device, to cause the computing device cluster to perform the data annotation method according to the first aspect.

According to a fourth aspect, a computer program product including instructions is provided. When the instructions are run on a computing device cluster, the computing device cluster is caused to perform the data annotation method according to the first aspect.

According to a fifth aspect, a computer-readable storage medium is provided, including computer program instructions. When the computer program instructions are executed by a computing device, the computing device performs the data annotation method according to the first aspect.

### BRIEF DESCRIPTION OF DRAWINGS

FIG. 1 is a diagram of a data annotation system according to an embodiment of this application;
FIG. 2 is a schematic flowchart of a data annotation method according to an embodiment of this application;
FIG. 3 is a diagram of a grid structure of a multimodal foundation model according to an embodiment of this application;
FIG. 4 is a diagram of a structure of a data annotation apparatus according to an embodiment of this application;
FIG. 5 is a diagram of a structure of a computing device according to an embodiment of this application;
FIG. 6 is a diagram of a structure of a computing device cluster according to an embodiment of this application; and
FIG. 7 is a diagram of a structure of a computing device cluster according to an embodiment of this application.

### DESCRIPTION OF EMBODIMENTS

To facilitate understanding of embodiments of this application, the following describes a data annotation method provided in embodiments of this application with reference to accompanying drawings.

Embodiments of this application provide a data annotation method. The method may be implemented by a cloud platform. The cloud platform may be a computing device or a computing device cluster. According to the data annotation method provided in embodiments of this application, to-be-annotated data such as an image (image), a point cloud (point cloud), and a depth map (depth map) uploaded by a user can be annotated, to obtain annotated data. In this way, the user can use the annotated data to train a neural network model used in a service scenario such as autonomous driving, robotics, or inspection point marking, so that a trained neural network model has a better understanding of an environment.

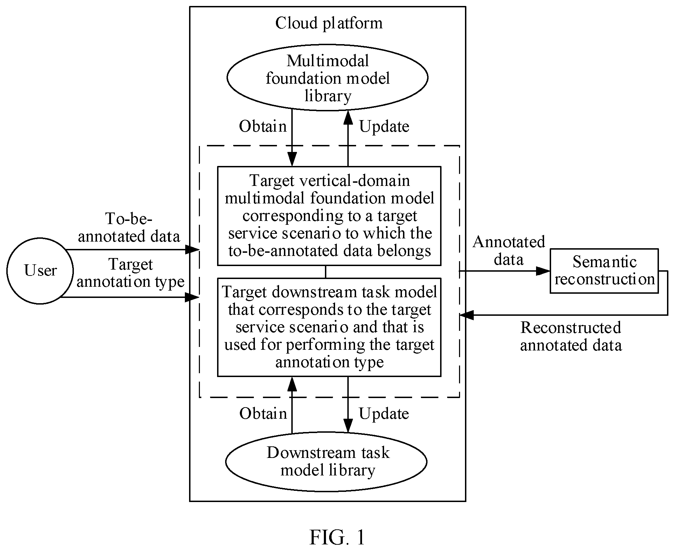

FIG. 1 is a diagram of a system architecture of a data annotation method according to an embodiment of this application. As shown in FIG. 1, in the data annotation method provided in this embodiment of this application, a cloud platform is deployed with a multimodal foundation model library and a downstream task model library, the multimodal foundation model library stores a plurality of vertical-domain multimodal foundation models, each vertical-domain multimodal foundation model corresponds to a service scenario, and the downstream task model library stores a plurality of downstream task models that correspond to each service scenario and that are used for respectively performing a plurality of annotation types. A user may upload at least one of an image and a point cloud to the cloud platform as to-be-annotated data. The to-be-annotated data may be collected by the user by using a real sensor or a virtual sensor. The user may further specify an annotation type. The annotation type may be two-dimensional (two-dimensional, 2D) object recognition, 2D object segmentation, 2D scene understanding, 3D object recognition, 3D object segmentation, 3D scene understanding, or the like. The cloud platform selects, from the multimodal foundation model library, a target vertical-domain multimodal foundation model corresponding to a service scenario to which the to-be-annotated data belongs, and selects, from the downstream task model library, a target downstream task model that corresponds to the service scenario to which the to-be-annotated data belongs and that is used for performing the annotation type specified by the user; then, annotates the to-be-annotated data by using the selected target multimodal foundation model and the selected target downstream task model; and further, performs semantic reconstruction on annotated data obtained through annotation, and performs training and updating on the target multimodal foundation model in the multimodal foundation model library and the target downstream task model in the downstream task model library based on data obtained through semantic reconstruction.

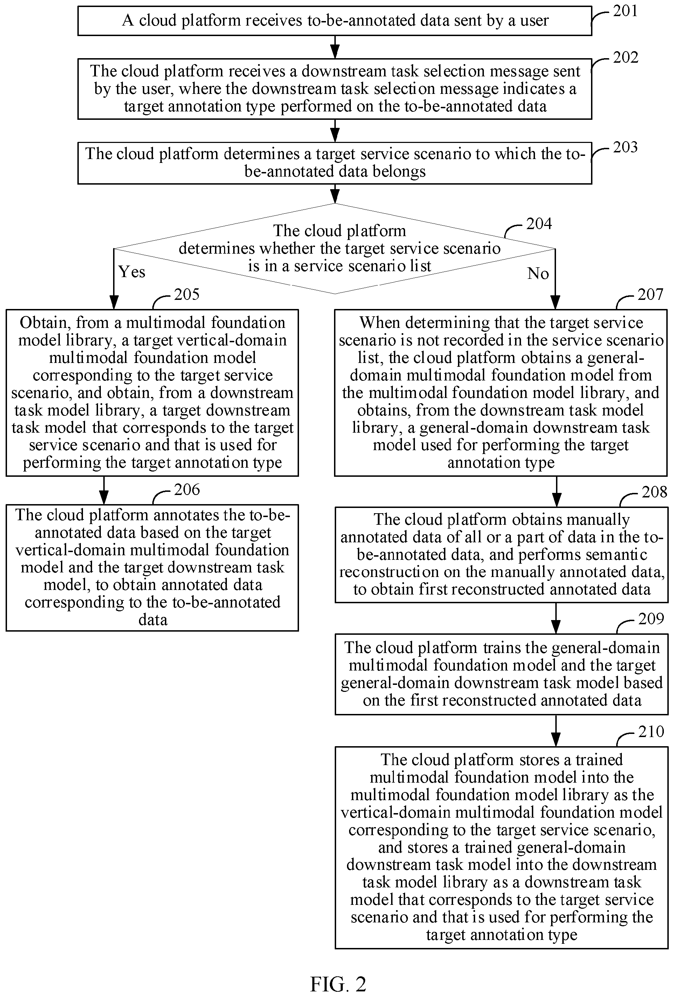

FIG. 2 is a schematic flowchart of a data annotation method according to an embodiment of this application. The method may be implemented by a cloud platform. As shown in FIG. 2, processing of the method may include the following steps.

Step 201: The cloud platform receives to-be-annotated data sent by a user.

The to-be-annotated data may be at least one of an image, a point cloud, and a depth map.

In an implementation, the user may collect, based on a requirement, at least one of an image and a point cloud in a target service scenario by using a real sensor or a virtual sensor or in other manners as the to-be-annotated data. The target service scenario may be residential communities, power grids, office buildings, open roads, ports, parks, exhibition halls, parks, or the like. Further, the to-be-annotated data collected by the user may have a time sequence.

Then, the user may send the to-be-annotated data to the cloud platform by using user equipment.

Step 202: The cloud platform receives a downstream task selection message sent by the user, where the downstream task selection message indicates a target annotation type performed on the to-be-annotated data.

In an implementation, the user may specify, based on an actual service requirement, a required annotation type by using the user equipment, for example, 2D object recognition, 2D object segmentation, 2D scene understanding, 3D object recognition, 3D object segmentation, or 3D scene understanding. Correspondingly, the user equipment may send the downstream task selection message to the cloud platform, where the downstream task selection message may carry indication information of the target annotation type.

There may be a plurality of manners for the user to specify the required target annotation type by using the user equipment. The following describes several of the manners by using examples.

Manner 1: The user equipment may display an annotation type list, where the annotation type list may include options of a plurality of annotation types, and the user may select an option of the required target annotation type from the annotation type list.

Manner 2: The user may input description information of the required target annotation type to the user equipment. The description information of the target annotation type may include a description text, a description speech, or the like corresponding to the target annotation type. For example, the target annotation type is object recognition, and the description information of the target annotation type may be a text "3D object recognition" or a corresponding speech of the text content "3D object recognition".

Step 203: The cloud platform determines a target service scenario to which the to-be-annotated data belongs.

In an implementation, to more accurately annotate the to-be-annotated data, the cloud platform may further determine the target service scenario to which the to-be-annotated data belongs. There may be a plurality of methods for determining the target service scenario to which the to-be-annotated data belongs. The following describes several of the methods by using examples.

Method 1: The user specifies the target service scenario to which the to-be-annotated data belongs.

In Method 1, the user may specify the target service scenario to which the to-be-annotated data belongs. Correspondingly, the user equipment may send a service scenario selection message to the cloud platform. The service scenario selection message carries indication information of the target service scenario. After receiving the service scenario selection message, the cloud platform determines, based on the indication information carried in the service scenario selection message, the target service scenario to which the to-be-annotated data belongs.

There may be a plurality of manners for the user to specify the target service scenario to which the to-be-annotated data belongs. The following describes several of the manners by using examples.

Manner 1: The user equipment may display a service scenario list, where the service scenario list records at least one service scenario, and the at least one service scenario is a service scenario corresponding to at least one vertical-domain multimodal foundation model stored in a multimodal foundation model library. If the target service scenario to which the to-be-annotated data belongs is in the service scenario list, the user may select an option of the target service scenario from the service scenario list. If the target service scenario to which the to-be-annotated data belongs is not in the service scenario list, the user may input, to the user equipment, description information of the target service scenario to which the to-be-annotated data belongs. The description information of the target service scenario may include a description text, a description speech, or the like corresponding to the target service scenario. For example, the target service scenario is an exhibition hall, and information about the target service scenario may be a text "exhibition hall" or a corresponding speech of the text content "exhibition hall".

Manner 2: The user may input, to the user equipment, information about the target service scenario to which the to-be-annotated data belongs.

The user may input, to the user equipment, description information of the target service scenario to which the to-be-annotated data belongs. The specific description information may be the same as that described in Manner 1. Details are not described herein.

Method 2: The cloud platform recognizes the target service scenario to which the to-be-annotated data belongs.

In Method 2, after receiving the to-be-annotated data uploaded by the user, the cloud platform may input the to-be-annotated data to a classification model, and the classification model outputs indication information of the target service scenario. In this way, the cloud platform uses a service scenario indicated by the indication information of the target service scenario as the target service scenario to which the to-be-annotated data belongs. The classification model may be a neural network model.

Step 204: The cloud platform determines whether the target service scenario is in the service scenario list.

In an implementation, the cloud platform may be deployed with a multimodal foundation model library and a downstream task model library. The multimodal foundation model library may store a vertical-domain multimodal foundation model corresponding to each of at least one service scenario, and the vertical-domain multimodal foundation model is a neural network model. Correspondingly the downstream task model library may store a plurality of downstream task models corresponding to each of the at least one service scenario, and the plurality of downstream task models corresponding to each service scenario are respectively used for performing a plurality of annotation types. Further, the cloud platform may further record the service scenario list, and the service scenario list records the at least one service scenario.

After determining the service scenario to which the to-be-annotated data belongs, the cloud platform may query whether the target service scenario is recorded in the service scenario list.

Step 205: When determining that the target service scenario is recorded in the service scenario list, the cloud platform obtains, from the multimodal foundation model library, a target vertical-domain multimodal foundation model corresponding to the target service scenario, and obtains, from the downstream task model library, a target downstream task model that corresponds to the target service scenario and that is used for performing the target annotation type.

In an implementation, when determining that the target service scenario is recorded in the service scenario list, the cloud platform may determine that the multimodal foundation model library stores the target vertical-domain multimodal foundation model corresponding to the target service scenario, and the downstream task model library stores the target downstream task model that corresponds to the target service scenario and that is used for performing the target annotation type. In this way, the cloud platform obtains the target vertical-domain multimodal foundation model from the multimodal foundation model library, and obtains the target downstream task model from the downstream task model library.

Step 206: The cloud platform annotates the to-be-annotated data based on the target vertical-domain multimodal foundation model and the target downstream task model, to obtain annotated data corresponding to the to-be-annotated data.

In an implementation, when the to-be-annotated data is an image, after obtaining the target vertical-domain multimodal foundation model, the cloud platform inputs the to-be-annotated data to the target vertical-domain multimodal foundation model. The target vertical-domain multimodal foundation model performs feature extraction on the to-be-annotated data, to output a first feature vector; and then outputs the first feature vector to the target downstream task model. The target downstream task model outputs the annotated data corresponding to the to-be-annotated data. When the target downstream task model is a 2D object recognition model, the annotated data may be data obtained by performing recognition annotation on categories of objects in the image. When the target downstream task model is a 2D object segmentation model, the annotated data may be data obtained by performing pixel-level segmentation annotation on different objects in the image. When the target downstream task model is a 2D scene understanding model, the annotated data may be data obtained by performing scene understanding annotation on the image.

When the to-be-annotated data is a point cloud, after obtaining the target vertical-domain multimodal foundation model, the cloud platform inputs the to-be-annotated data to the target vertical-domain multimodal foundation model according to a time sequence. The target vertical-domain multimodal foundation model performs feature extraction on the to-be-annotated data, to output a second feature vector; and then outputs the second feature vector to the target downstream task model. The target downstream task model outputs the annotated data corresponding to the to-be-annotated data. When the target downstream task model is a 3D object recognition model, the annotated data may be data obtained by performing recognition annotation on categories of objects in the point cloud. When the target downstream task model is a 3D object segmentation model, the annotated data may be data obtained by performing segmentation annotation on different objects in the point cloud. When the target downstream task model is a 3D scene understanding model, the annotated data may be data obtained by performing scene understanding annotation on the point cloud.

When the to-be-annotated data is an image and a point cloud, after obtaining the target vertical-domain multimodal foundation model, the cloud platform inputs the image and the point cloud to the target vertical-domain multimodal foundation model as two channels of input data. The target vertical-domain multimodal foundation model performs feature fusion on the image and the point cloud, to output a fused third feature vector; and then outputs the third feature vector to the target downstream task model. The target downstream task model outputs the annotated data corresponding to the to-be-annotated data. When the target downstream task model is a 2D object recognition model, the annotated data may be data obtained by performing recognition annotation on categories of objects in the image. When the target downstream task model is a 2D object segmentation model, the annotated data may be data obtained by performing pixel-level segmentation annotation on different objects in the image. When the target downstream task model is a 2D scene understanding model, the annotated data may be data obtained by performing scene understanding annotation on the image. When the target downstream task model is a 3D object recognition model, the annotated data may be data obtained by performing recognition annotation on categories of objects in the point cloud. When the target downstream task model is a 3D object segmentation model, the annotated data may be data obtained by performing segmentation annotation on different objects in the point cloud. When the target downstream task model is a 3D scene understanding model, the annotated data may be data obtained by performing scene understanding annotation on the point cloud.

Further, if the to-be-annotated data has a time sequence, when the to-be-annotated data is input to the target vertical-domain multimodal foundation model, the to-be-annotated data may be input to the target vertical-domain multimodal foundation model according to the time sequence.

In a possible implementation, in addition to uploading the to-be-annotated data, the user may further send, to the cloud platform, a target text used for describing a scene understanding requirement of the to-be-annotated data. Correspondingly, processing in step 206 may be as follows: The cloud platform annotates the to-be-annotated data based on the target vertical-domain multimodal foundation model, the target downstream task model, and the target text, to obtain the annotated data corresponding to the to-be-annotated data.

In this possible implementation, when the to-be-annotated data is an image, after obtaining the target vertical-domain multimodal foundation model, the cloud platform inputs the to-be-annotated data and the target text to the target vertical-domain multimodal foundation model as two channels of input data. The target vertical-domain multimodal foundation model performs feature extraction on the to-be-annotated data, to output a fourth feature vector, and performs feature extraction on the target text, to output a fifth feature vector; and then outputs the fourth feature vector and the fifth feature vector to the target downstream task model. The target downstream task model outputs the annotated data corresponding to the to-be-annotated data. When the target downstream task model is a 2D scene understanding model, the annotated data may be that scene understanding annotation is performed on the image based on a requirement indicated by the target text. For example, the target text is "what building is in the scene".

When the to-be-annotated data is a point cloud, after obtaining the target vertical-domain multimodal foundation model, the cloud platform inputs the to-be-annotated data and the target text to the target vertical-domain multimodal foundation model as two channels of input data. The target vertical-domain multimodal foundation model performs feature extraction on the to-be-annotated data, to output a sixth feature vector, and performs feature extraction on the target text, to output a seventh feature vector; and then outputs the sixth feature vector and the seventh feature vector to the target downstream task model. The target downstream task model outputs the annotated data corresponding to the to-be-annotated data. When the target downstream task model is a 3D scene understanding model, the annotated data may be that scene understanding annotation is performed on the point cloud based on a requirement indicated by the target text. For example, the target text is "what building is in the scene".

When the to-be-annotated data is an image and a point cloud, after obtaining the target vertical-domain multimodal foundation model, the cloud platform inputs the image and the point cloud in the to-be-annotated data and the target text to the target vertical-domain multimodal foundation model as three channels of input data. The target vertical-domain multimodal foundation model performs feature fusion on the image and the point cloud, to output an eighth feature vector, and performs feature extraction on the target text, to output a ninth feature vector; and then outputs the eighth feature vector and the ninth feature vector to the target downstream task model. The target downstream task model outputs the annotated data corresponding to the to-be-annotated data. When the target downstream task model is a 2D scene understanding model, the annotated data may be that scene understanding annotation is performed on the image based on a requirement indicated by the target text. For example, the target text is "what building is in the scene". When the target downstream task model is a 2D scene understanding model, the annotated data may be that scene understanding annotation is performed on the point cloud based on a requirement indicated by the target text. For example, the target text is "what building is in the scene".

Further, processing for a case in which the to-be-annotated data is a depth map is the same as processing for the case in which the to-be-annotated data is the point cloud, and processing for a case in which the to-be-annotated data is an image and a depth map is the same as processing for the case in which the to-be-annotated data is the image and the point cloud. Details are not described herein.

In a possible implementation, before the target vertical-domain multimodal foundation model is used for annotation, unsupervised training may be performed on the target vertical-domain multimodal foundation model by using the to-be-annotated data uploaded by the user. Correspondingly, the target vertical-domain multimodal foundation model used for annotation in step 206 is obtained after the unsupervised training.

In a possible implementation, the cloud platform may return, to the user, the annotated data obtained after the annotation in step 206. Alternatively, the cloud platform may perform manual annotation correction on the annotated data obtained after the annotation in step 206, and return, to the user, data obtained after the manual annotation correction.

In a possible implementation, the user may further specify an annotated data type. Correspondingly, the user equipment may send an annotated data type selection message to the cloud platform. After obtaining the annotated data, the cloud platform may first manually perform annotation correction on the annotated data, and then perform semantic reconstruction on annotated data obtained after the annotation correction, to obtain second reconstructed annotated data of an annotated data type indicated by the annotated data type selection message. The annotated data type may be an annotated dense point cloud, an annotated single-frame point cloud, an annotated depth map, an annotated semantic grid, an annotated picture from any viewpoint, or the like. After obtaining the second reconstructed annotated data, the cloud platform may further return the second reconstructed annotated data to the user.

In a possible implementation, after obtaining the annotated data, the cloud platform may first manually perform annotation correction on the annotated data, and then perform semantic reconstruction on annotated data obtained after the annotation correction, to obtain third reconstructed annotated data of a same data type as the annotated data. In this way, the cloud platform may train the target vertical-domain multimodal foundation model and the target downstream task model by using the third reconstructed annotated data, to obtain a trained vertical-domain multimodal foundation model and a trained downstream task model. Then, the cloud platform may update the target vertical-domain multimodal foundation model stored in the multimodal foundation model library to the trained vertical-domain multimodal foundation model; and update the target downstream task model stored in the downstream task model library to the trained downstream task model.

Step 207: When determining that the target service scenario is not recorded in the service scenario list, the cloud platform obtains a general-domain multimodal foundation model from the multimodal foundation model library, and obtains, from the downstream task model library, a general-domain downstream task model used for performing the target annotation type.

In an implementation, the multimodal foundation model library may further store a general-domain downstream task model, and the downstream task model library may further store, for each annotation type, a general-domain downstream task model used for performing the annotation type.

When determining that the target service scenario is not recorded in the service scenario list, the cloud platform may obtain a general-domain multimodal foundation model from the multimodal foundation model library, and obtain, from the downstream task model library, a target general-domain downstream task model used for performing the target annotation type.

In a possible implementation, after the general-domain multimodal foundation model is obtained, unsupervised training may be performed on the general-domain multimodal foundation model based on the to-be-annotated data uploaded by the user.

Step 208: The cloud platform obtains manually annotated data of all or a part of data in the to-be-annotated data, and performs semantic reconstruction on the manually annotated data, to obtain first reconstructed annotated data.

In an implementation, when the multimodal foundation model library does not store the target vertical-domain multimodal foundation model corresponding to the target service scenario, the cloud platform may first manually annotate the all or part of data in the to-be-annotated data based on an annotation requirement of the user, to obtain the manually annotated data, and then perform semantic reconstruction on the manually annotated data, to obtain the first reconstructed annotated data. A data type of the first reconstructed annotated data is the same as a data type of the annotated data that is output by the target downstream task model. For example, if the data type of the annotated data that is output by the downstream task model is an annotated image, the first reconstructed annotated data is also an annotated image. If the data type of the annotated data that is output by the downstream task model is an annotated point cloud, the first reconstructed annotated data is also an annotated point cloud.

Further, in addition to the manual annotation, in step 208, a 2D annotation model may also be used for performing 2D annotation on the all or part of data in the to-be-annotated data, and performing semantic reconstruction on data obtained through 2D annotation.

After obtaining the first reconstructed annotated data, the cloud platform may return the obtained first reconstructed annotated data to the user.

In a possible implementation, when the user specifies an annotated data type, the cloud platform further performs semantic reconstruction on 2D annotated data, to obtain four reconstructed annotated data of the annotated data type indicated by the annotated data type selection message, and may return the fourth reconstructed annotated data to the user.

Step 209: The cloud platform trains the general-domain multimodal foundation model and the target general-domain downstream task model based on the first reconstructed annotated data.

In an implementation, after the first reconstructed annotated data is obtained in step 208, the general-domain multimodal foundation model and the target downstream task model may be trained by using the first reconstructed annotated data, to obtain a trained multimodal foundation model and a trained general-domain downstream task model.

Further, after the general-domain multimodal foundation model is obtained, if unsupervised training is performed on the general-domain multimodal foundation model based on the to-be-annotated data uploaded by the user, the general-domain multimodal foundation model trained in step 209 may be obtained after unsupervised training is performed on the general-domain multimodal foundation model based on the to-be-annotated data uploaded by the user.

Step 210: The cloud platform stores the trained multimodal foundation model into the multimodal foundation model library as the vertical-domain multimodal foundation model corresponding to the target service scenario, and stores the trained general-domain downstream task model into the downstream task model library as the downstream task model that corresponds to the target service scenario and that is used for performing the target annotation type.

In an implementation, after the general-domain foundation model and the target general-domain downstream task model are trained by using the first reconstructed annotated data, a saving query message for the trained multimodal foundation model and the trained general-domain downstream task model may be sent to the user. If the user permits saving the trained multimodal foundation model and the trained general-domain downstream task model, the user may return a saving permission message to the cloud platform by using the user equipment. After receiving the saving permission message sent by the user equipment, the cloud platform stores the trained multimodal foundation model into the multimodal foundation model library as the vertical-domain multimodal foundation model corresponding to the target service scenario, and stores the trained general-domain downstream task model into the downstream task model library as the downstream task model that corresponds to the target service scenario and that is used for performing the target annotation type.

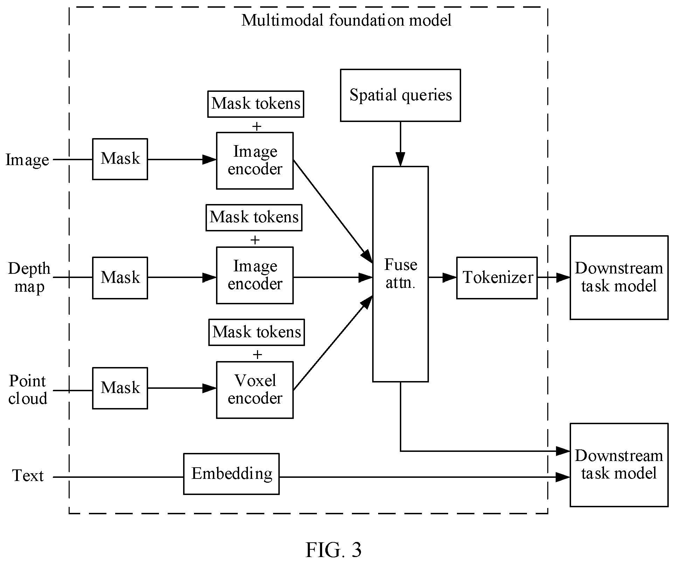

In a possible implementation, FIG. 3 shows a possible network architecture of a multimodal foundation model. The multimodal foundation model herein may be a vertical-domain multimodal foundation model or a general-domain multimodal foundation model. The network architecture includes a mask (mask) module, a mask token (mask token), an image encoder (image encoder), a voxel encoder (voxel encoder), a fuse attention (fuse attention, fuse attn.) mechanism, spatial queries (spatial queries), a tokenizer (tokenizer), and an embedding (embedding) layer. The network structure may have four channels of inputs: an image, a depth map, a point cloud, and a text. When no text is input, an output of the multimodal foundation model is an output of the tokenizer. When a text is input, an output of the multimodal foundation model is an output of the fuse attn. and the embedding. An output of the network structure is used as an input of the downstream task model.

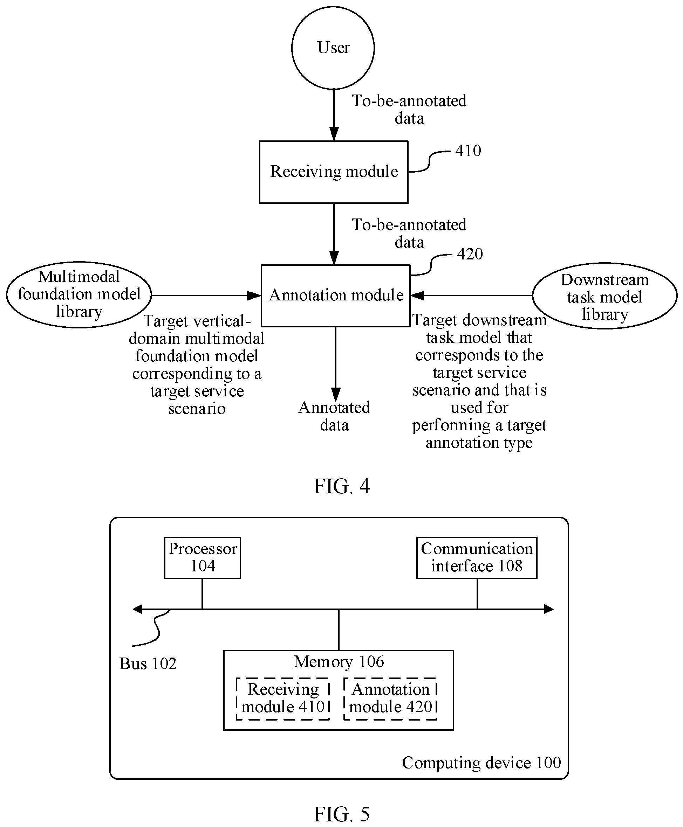

An embodiment of this application further provides a data annotation apparatus. The apparatus may be a cloud platform. As shown in FIG. 4, the apparatus may include a receiving module 410 and an annotation module 420.

The receiving module 410 is configured to: receive to-be-annotated data sent by a user, where the to-be-annotated data is at least one of an image, a point cloud, and a depth map; and receive a first downstream task selection message sent by the user, where the first downstream task selection message indicates a first annotation type performed on the to-be-annotated data.

The annotation module 420 is configured to: obtain, from a multimodal foundation model library, a target vertical-domain multimodal foundation model corresponding to a service scenario to which the first to-be-annotated data belongs; and obtain, from a downstream task model library, a target downstream task model that corresponds to the service scenario to which the first to-be-annotated data belongs and that is used for performing the first annotation type.

The annotation module 420 is further configured to annotate the first to-be-annotated data based on the target vertical-domain multimodal foundation model and the target downstream task model, to obtain annotated data corresponding to the first to-be-annotated data, where the target vertical-domain multimodal foundation model is used for performing feature extraction on the first to-be-annotated data, and the target downstream task model is used for outputting, based on a feature extracted by the target vertical-domain multimodal foundation model, the annotated data corresponding to the first to-be-annotated data.

In a possible implementation, the apparatus further includes a training module, configured to:
train the target vertical-domain multimodal foundation model based on the first to-be-annotated data.

In a possible implementation, the receiving module 410 is further configured to:
receive an annotated data type selection message sent by the user.

The apparatus further includes a reconstruction module, configured to:
perform semantic reconstruction on first annotated data, to obtain first reconstructed annotated data of a data type indicated by the annotated data type selection message; and
send the first reconstructed annotated data to the user.

In a possible implementation, the apparatus further includes a reconstruction module, configured to:
perform semantic reconstruction on first annotated data, to obtain second reconstructed annotated data, where a data type of the second reconstructed annotated data is the same as a data type of the annotated data.

The apparatus further includes a training module, configured to train the target vertical-domain multimodal foundation model and the target downstream task model based on the second reconstructed annotated data, to obtain a trained vertical-domain multimodal foundation model and a trained downstream task model.

The apparatus further includes an update module, configured to: update the target vertical-domain multimodal foundation model in the multimodal foundation model library to a trained vertical-domain multimodal foundation model; and update the target downstream task model in the downstream task model library to a trained downstream task model.

In a possible implementation, the receiving module 410 is further configured to:
receive a service scenario selection message sent by the user; and
determine a service scenario indicated by the service scenario selection message as the service scenario to which the first to-be-annotated data belongs.

The annotation module 420 is configured to:
determine that the multimodal foundation model library stores the target vertical-domain multimodal foundation model corresponding to the service scenario to which the first to-be-annotated data belongs.

In a possible implementation, the receiving module 410 is further configured to:
receive second to-be-annotated data sent by the user, where the second to-be-annotated data is at least one of an image, a point cloud, and a depth map; and
receive a second downstream task selection message sent by the user, where the second downstream task selection message indicates a second annotation type performed on the second to-be-annotated data.

The annotation module 420 is further configured to:
determine that the multimodal foundation model library does not store a vertical-domain multimodal foundation model corresponding to a service scenario to which the second to-be-annotated data belongs; and obtain manually annotated data corresponding to a part of data in the second to-be-annotated data, where the manually annotated data is annotated based on the second annotation type.

The apparatus further includes a reconstruction module, configured to: perform semantic reconstruction on the manually annotated data, to obtain third reconstructed annotated data; and send the third reconstructed annotated data to the user.

In a possible implementation, the multimodal foundation model library further stores a general-domain multimodal foundation model, and the downstream task model library further stores a plurality of general-domain downstream task models used for respectively performing a plurality of annotation types. The training module is further configured to:
obtain a general-domain multimodal foundation model from the multimodal foundation model library;
obtain, from the downstream task model library, a target general-domain downstream task model used for performing the second annotation type;
train the general-domain multimodal foundation model and the target general-domain downstream task model based on the third reconstructed annotated data, to obtain a trained general-domain multimodal foundation model and a trained general-domain downstream task model;
store the trained general-domain multimodal foundation model into the multimodal foundation model library as the vertical-domain multimodal foundation model corresponding to the service scenario to which the second to-be-annotated data belongs; and
store the trained general-domain downstream task model into the downstream task model library as a downstream task model that corresponds to the service scenario to which the second to-be-annotated data belongs and that is used for performing the second annotation type.

Both the receiving module 410 and the annotation module 420 may be implemented by software or hardware. For example, the following describes an implementation of the receiving module 410. Similarly, for an implementation of the annotation module 420, refer to the implementation of the receiving module 410.

The module is used as an example of a software functional unit, and the receiving module 410 may include code run on a computing instance. The computing instance may be at least one of the following computing devices: a physical host (computing device), a virtual machine, a container, or the like. Further, there may be one or more computing devices. For example, the receiving module 410 may include code run on a plurality of hosts/virtual machines/containers. It should be noted that the plurality of hosts/virtual machines/containers configured to run the application may be distributed in a same region or different regions. The plurality of hosts/virtual machines/containers configured to run the code may be distributed in a same AZ or different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC or a plurality of VPCs. Usually, one VPC is disposed in one region. A communication gateway needs to be disposed in each VPC for cross-region communication between two VPCs in a same region or between VPCs in different regions. Interconnection between the VPCs is implemented through the communication gateway.

The module is used as an example of a hardware functional unit, and the receiving module 410 may include at least one computing device, for example, a server. Alternatively, the receiving module 410 may be a device implemented by using an ASIC or a PLD, or the like. The PLD may be implemented by a CPLD, an FPGA, a GAL, or any combination thereof.

A plurality of computing devices included in the receiving module 410 may be distributed in a same region or different regions. The plurality of computing devices included in the receiving module 4100 may be distributed in a same AZ or different AZs. Similarly, the plurality of computing devices included in the management module 410 may be distributed in a same VPC or a plurality of VPCs. The plurality of computing devices may be any combination of computing devices such as a server, an ASIC, a PLD, a CPLD, an FPGA, and GAL.

This application further provides a computing device 100. As shown in FIG. 5, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that a quantity of processors and a quantity of memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, the bus is represented by using only one line in FIG. 5. However, this does not mean that there is only one bus or only one type of bus. The bus 102 may include a path for transmitting information between components (for example, the memory 106, the processor 104, and the communication interface 108) of the computing device 100.

The processor 104 may include any one or more of the following processors: a central processing unit (central processing unit, CPU), a graphics processing unit (graphics processing unit, GPU), a microprocessor (microprocessor, MP), a digital signal processor (digital signal processor, DSP), and the like.

The memory 106 may include a volatile memory (volatile memory), for example, a random access memory (random access memory, RAM). The memory 106 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable code, and the processor 104 executes the executable code to separately implement functions of the receiving module 410 and the annotation module 420, to implement a data annotation method. In other words, the memory 106 stores instructions used for performing the data annotation method.

The communication interface 108 implements communication between the computing device 100 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

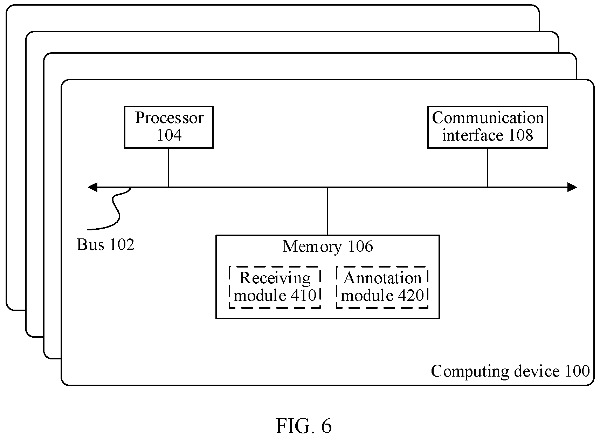

As shown in FIG. 6, the computing device cluster includes at least one computing device 100. Memories 106 of one or more computing devices 100 in the computing device cluster may store same instructions used for performing a data annotation method.

Alternatively, in some possible implementations, the memories 106 of the one or more computing devices 100 in the computing device cluster may respectively store a part of instructions used for performing the data annotation method. In other words, a combination of the one or more computing devices 100 may jointly execute the instructions used for performing the data annotation method.

It should be noted that memories 106 of different computing devices 100 in the computing device cluster may store different instructions respectively used for performing a part of functions of the data annotation method.

Alternatively, in some possible implementations, the memories 106 of the one or more computing devices 100 in the computing device cluster may respectively store a part of instructions used for performing the data annotation method. In other words, a combination of the one or more computing devices 100 may jointly execute the instructions used for performing the data annotation method.

It should be noted that memories 106 of different computing devices 100 in the computing device cluster may store different instructions used for performing a part of functions of the data annotation method. In other words, the instructions stored in the memories 106 of the different computing devices 100 may implement functions of one or more nodes in a receiving module 410 and an annotation module 420.

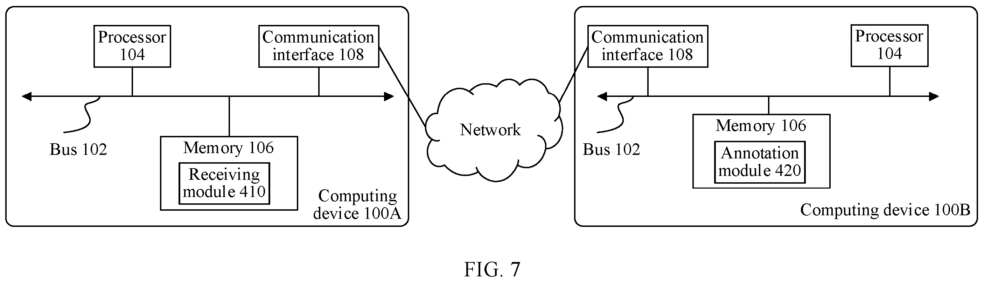

In some possible implementations, the one or more computing devices in the computing device cluster may be connected via a network. The network may be a wide area network, a local area network, or the like. FIG. 7 shows a possible implementation. As shown in FIG. 7, two computing devices 100A and 100B are connected via a network. Specifically, the computing devices are connected to the network through communication interfaces of the computing devices. In this type of possible implementation, a memory 106 of the computing device 100A stores instructions for performing a function of the receiving module 410. In addition, a memory 106 of the computing device 100B stores instructions for performing a function of the annotation module 420. It should be understood that a function of the computing device 100A shown in FIG. 7 may alternatively be completed by a plurality of computing devices 100. Similarly, a function of the computing device 100B may alternatively be completed by a plurality of computing devices 100.

An embodiment of this application further provides another computing device cluster. For a connection relationship between computing devices in the computing device cluster, refer to a connection manner in the computing device cluster in FIG. 6 and FIG. 7 similarly. A difference lies in that memories 106 of one or more computing devices 100 in the computing device cluster may store same instructions used for performing a data annotation method.

Alternatively, in some possible implementations, the memories 106 of the one or more computing devices 100 in the computing device cluster may respectively store a part of instructions used for performing the data annotation method. In other words, a combination of the one or more computing devices 100 may jointly execute instructions used for performing a data annotation-based method.

It should be noted that memories 106 of different computing devices 100 in the computing device cluster may store different instructions used for performing a part of functions of a cloud computing technology-based access management apparatus. In other words, the instructions stored in the memories 106 of the different computing devices 100 may implement functions of one or more nodes in a receiving module 410 and an annotation module 420.

An embodiment of this application further provides a computer program product including instructions. The computer program product may be software or a program product that includes instructions and that can run on a computing device or can be stored in any usable medium. When the computer program product runs on a computing device, at least one computing device is caused to perform the data annotation method provided in embodiments of this application.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the computing device to perform the data annotation method provided in embodiments of this application.

In this application, terms such as "first" and "second" are used for distinguishing between same items or similar items having basically same purposes and functions. It should be understood that there is no logical or time sequence dependency between "first" and "second", and a quantity and an execution order are not limited. It should also be understood that although the following descriptions use terms such as "first" and "second" to describe various elements, the elements should not be limited by the terms. The terms are simply used for distinguishing one element from another. For example, without departing from the scope of various examples, a first feature vector may be referred to as a second feature vector, and similarly, the second feature vector may be referred to as a first feature vector. Both the first feature vector and the second feature vector may be collectively referred to as feature vectors, and in some cases, the first feature vector and the second feature vector may be independent and different feature vectors.

In this application, the term "at least one" means one or more, and the term "a plurality of" means two or more.

The foregoing descriptions are merely specific implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A data annotation method, wherein the method is applied to a cloud platform, the cloud platform is deployed with a multimodal foundation model library and a downstream task model library, the multimodal foundation model library stores a plurality of vertical-domain multimodal foundation models, each vertical-domain multimodal foundation model corresponds to a service scenario, and the downstream task model library stores a plurality of downstream task models that correspond to each service scenario and that are used for respectively performing a plurality of annotation types; and the method comprises:
receiving first to-be-annotated data sent by a user, wherein the first to-be-annotated data is at least one of an image, a point cloud, and a depth map;
obtaining, from the multimodal foundation model library, a target vertical-domain multimodal foundation model corresponding to a service scenario to which the first to-be-annotated data belongs;
receiving a first downstream task selection message sent by the user, wherein the first downstream task selection message indicates a first annotation type performed on the to-be-annotated data;
obtaining, from the downstream task model library, a target downstream task model that corresponds to the service scenario to which the first to-be-annotated data belongs and that is used for performing the first annotation type; and
annotating the first to-be-annotated data based on the target vertical-domain multimodal foundation model and the target downstream task model, to obtain annotated data corresponding to the first to-be-annotated data, wherein the target vertical-domain multimodal foundation model is used for performing feature extraction on the first to-be-annotated data, and the target downstream task model is used for outputting, based on a feature extracted by the target vertical-domain multimodal foundation model, the annotated data corresponding to the first to-be-annotated data.

2. The method according to claim 1, wherein the method further comprises:
receiving an annotated data type selection message sent by the user;
performing semantic reconstruction on the first annotated data, to obtain first reconstructed annotated data of a data type indicated by the annotated data type selection message; and
sending the first reconstructed annotated data to the user.

3. The method according to claim 1, wherein the method further comprises:
performing semantic reconstruction on the first annotated data, to obtain second reconstructed annotated data, wherein a data type of the second reconstructed annotated data is the same as a data type of the annotated data;
training the target vertical-domain multimodal foundation model and the target downstream task model based on the second reconstructed annotated data, to obtain a trained vertical-domain multimodal foundation model and a trained downstream task model;
updating the target vertical-domain multimodal foundation model in the multimodal foundation model library to the trained vertical-domain multimodal foundation model; and
updating the target downstream task model in the downstream task model library to the trained downstream task model.

4. The method according to any one of claims 1 to 3, wherein before obtaining the target vertical-domain multimodal foundation model corresponding to the service scenario to which the first to-be-annotated data belongs, the method further comprises:
receiving a service scenario selection message sent by the user;
determining a service scenario indicated by the service scenario selection message as the service scenario to which the first to-be-annotated data belongs; and
determining that the multimodal foundation model library stores the target vertical-domain multimodal foundation model corresponding to the service scenario to which the first to-be-annotated data belongs.

5. The method according to any one of claims 1 to 4, wherein the method further comprises:
receiving second to-be-annotated data sent by the user, wherein the second to-be-annotated data is at least one of an image, a point cloud, and a depth map;
receiving a second downstream task selection message sent by the user, wherein the second downstream task selection message indicates a second annotation type performed on the second to-be-annotated data;
determining that the multimodal foundation model library does not store a vertical-domain multimodal foundation model corresponding to a service scenario to which the second to-be-annotated data belongs;
obtaining manually annotated data corresponding to a part of data in the second to-be-annotated data, wherein the manually annotated data is annotated based on the second annotation type;
performing semantic reconstruction on the manually annotated data, to obtain third reconstructed annotated data; and
sending the third reconstructed annotated data to the user.

6. The method according to claim 5, wherein the multimodal foundation model library further stores a general-domain multimodal foundation model, and the downstream task model library further stores a plurality of general-domain downstream task models used for respectively performing the plurality of annotation types; and the method further comprises:
obtaining a general-domain multimodal foundation model from the multimodal foundation model library;
obtaining, from the downstream task model library, a target general-domain downstream task model used for performing the second annotation type;
training the general-domain multimodal foundation model and the target general-domain downstream task model based on the third reconstructed annotated data, to obtain a trained general-domain multimodal foundation model and a trained general-domain downstream task model;
storing the trained general-domain multimodal foundation model into the multimodal foundation model library as the vertical-domain multimodal foundation model corresponding to the service scenario to which the second to-be-annotated data belongs; and
storing the trained general-domain downstream task model into the downstream task model library as a downstream task model that corresponds to the service scenario to which the second to-be-annotated data belongs and that is used for performing the second annotation type.

7. A data annotation apparatus, wherein the method is applied to a cloud platform, the cloud platform is deployed with a multimodal foundation model library and a downstream task model library, the multimodal foundation model library stores a plurality of vertical-domain multimodal foundation models, each vertical-domain multimodal foundation model corresponds to a service scenario, and the downstream task model library stores a plurality of downstream task models that correspond to each service scenario and that are used for respectively performing a plurality of annotation types; and the method comprises:
a receiving module, configured to: receive to-be-annotated data sent by a user, wherein the to-be-annotated data is at least one of an image, a point cloud, and a depth map; and receive a first downstream task selection message sent by the user, wherein the first downstream task selection message indicates a first annotation type performed on the to-be-annotated data; and
an annotation module, configured to: obtain, from the multimodal foundation model library, a target vertical-domain multimodal foundation model corresponding to a service scenario to which the first to-be-annotated data belongs; and obtain, from the downstream task model library, a target downstream task model that corresponds to the service scenario to which the first to-be-annotated data belongs and that is used for performing the first annotation type, wherein
the annotation module is further configured to annotate the first to-be-annotated data based on the target vertical-domain multimodal foundation model and the target downstream task model, to obtain annotated data corresponding to the first to-be-annotated data, wherein the target vertical-domain multimodal foundation model is used for performing feature extraction on the first to-be-annotated data, and the target downstream task model is used for outputting, based on a feature extracted by the target vertical-domain multimodal foundation model, the annotated data corresponding to the first to-be-annotated data.

8. The apparatus according to claim 7, wherein the receiving module is further configured to:
receive an annotated data type selection message sent by the user, wherein
the apparatus further comprises a reconstruction module, configured to:
perform semantic reconstruction on the first annotated data, to obtain first reconstructed annotated data of a data type indicated by the annotated data type selection message; and
send the first reconstructed annotated data to the user.

9. The apparatus according to claim 7, wherein the apparatus further comprises a reconstruction module, configured to:
perform semantic reconstruction on the first annotated data, to obtain second reconstructed annotated data, wherein a data type of the second reconstructed annotated data is the same as a data type of the annotated data;
the apparatus further comprises a training module, configured to train the target vertical-domain multimodal foundation model and the target downstream task model based on the second reconstructed annotated data, to obtain a trained vertical-domain multimodal foundation model and a trained downstream task model; and
the apparatus further comprises an update module, configured to: update the target vertical-domain multimodal foundation model in the multimodal foundation model library to the trained vertical-domain multimodal foundation model; and update the target downstream task model in the downstream task model library to the trained downstream task model.

10. The apparatus according to any one of claims 7 to 9, wherein the receiving module is further configured to:
receive a service scenario selection message sent by the user; and
determine a service scenario indicated by the service scenario selection message as the service scenario to which the first to-be-annotated data belongs, wherein
the annotation module is configured to:
determine that the multimodal foundation model library stores the target vertical-domain multimodal foundation model corresponding to the service scenario to which the first to-be-annotated data belongs.

11. The apparatus according to any one of claims 7 to 10, wherein the receiving module is further configured to:
receive second to-be-annotated data sent by the user, wherein the second to-be-annotated data is at least one of an image, a point cloud, and a depth map; and
receive a second downstream task selection message sent by the user, wherein the second downstream task selection message indicates a second annotation type performed on the second to-be-annotated data;
the annotation module is further configured to:
determine that the multimodal foundation model library does not store a vertical-domain multimodal foundation model corresponding to a service scenario to which the second to-be-annotated data belongs; and obtain manually annotated data corresponding to a part of data in the second to-be-annotated data, wherein the manually annotated data is annotated based on the second annotation type; and
the apparatus further comprises a reconstruction module, configured to: perform semantic reconstruction on the manually annotated data, to obtain third reconstructed annotated data; and send the third reconstructed annotated data to the user.

12. The apparatus according to claim 11, wherein the multimodal foundation model library further stores a general-domain multimodal foundation model, and the downstream task model library further stores a plurality of general-domain downstream task models used for respectively performing the plurality of annotation types; and the training module is further configured to:
obtain a general-domain multimodal foundation model from the multimodal foundation model library;
obtain, from the downstream task model library, a target general-domain downstream task model used for performing the second annotation type;
train the general-domain multimodal foundation model and the target general-domain downstream task model based on the third reconstructed annotated data, to obtain a trained general-domain multimodal foundation model and a trained general-domain downstream task model;
store the trained general-domain multimodal foundation model into the multimodal foundation model library as the vertical-domain multimodal foundation model corresponding to the service scenario to which the second to-be-annotated data belongs; and
store the trained general-domain downstream task model into the downstream task model library as a downstream task model that corresponds to the service scenario to which the second to-be-annotated data belongs and that is used for performing the second annotation type.

13. A computing device cluster, wherein the computing device cluster comprises at least one computing device, and each computing device comprises a processor and a memory; and
the processor of the at least one computing device is configured to execute instructions stored in the memory of the device, to cause the computing device cluster to perform the data annotation method according to any one of claims 1 to 6.

14. A computer program product comprising instructions, wherein when the instructions are run on a computing device cluster, the computing device cluster is caused to perform the data annotation method according to any one of claims 1 to 6.

15. A computer-readable storage medium, comprising computer program instructions, wherein when the computer program instructions are executed by an edge device, the edge device performs the data annotation method according to any one of claims 1 to 6.
